# EUROPÄISCHE PATENTANMELDUNG

(11) **EP 3 786 739 A1**
(43) Veröffentlichungstag der Anmeldung: **03.03.2021**
(21) Anmeldenummer: 19194042.8
(22) Anmeldetag: 28.08.2019
(51) Int. Cl.: G05B 19/418

(54) **VERGLEICH EINER REALEN ANLAGE MIT EINEM DIGITALEN ZWILLING DURCH DATENVERKEHRSANALYSE**

(71) Anmelder: Siemens Aktiengesellschaft, 80333 München (DE); Friedrich-Alexander-Universität Erlangen-Nürnberg, 91054 Erlangen (DE)
(72) Erfinder: Baudisch, Thomas, 86938 Schondorf am Ammersee (DE); Metzner, Maximilian, 96047 Bamberg (DE); Montrone, Francesco, 85521 Riemerling (DE); Peschke, Jörn, 90489 Nürnberg (DE); Rossgoderer, Ulrich, 81539 München (DE)

(57) **Zusammenfassung**

Die vorliegende Erfindung betrifft ein Verfahren und eine Vorrichtung zum Auffinden von Unterschieden zwischen einer automatisierten Anlage und einem digitalen Zwilling der automatisierten Anlage, sowie eine automatisierte Anlage umfassend die Vorrichtung zum Auffinden von Unterschieden zwischen der automatisierten Anlage und einem digitalen Zwilling der automatisierten Anlage. Es wird eine auf einem realen Bus-System der automatisierten Anlage aufgenommene Kommunikation mit wenigstens einem aus einer erwarteten Kommunikation auf einem virtuellen Bus-System des digitalen Zwillings abgeleitetem Kommunikationsmuster verglichen. Falls die aufgenommene reale Kommunikation nicht mit dem abgeleiteten Kommunikationsmuster korreliert, wird wenigstens eine Komponente der automatisierten Anlage bestimmt, welche von der entsprechenden Komponente des digitalen Zwillings abweicht.

## Beschreibung

Die vorliegende Erfindung betrifft ein Verfahren und eine Vorrichtung zum Auffinden von Unterschieden zwischen einer automatisierten Anlage und einem digitalen Zwilling der automatisierten Anlage, sowie eine automatisierte Anlage umfassend die Vorrichtung zum Auffinden von Unterschieden zwischen der automatisierten Anlage und einem digitalen Zwilling der automatisierten Anlage.

### Stand der Technik

Die Automatisierungstechnik betrifft insbesondere den Anlagenbau im Bereich des Maschinenbaus und der Elektrotechnik. Sie wird eingesetzt, um technische Vorgänge in Maschinen, Anlagen oder technischen Systemen zu automatisieren und somit automatisierte Anlage zu schaffen. Dazu kommen verschiedenen Aktoren in einer automatisierten Anlage zum Einsatz, die einen Prozess (z. B. Fertigungsprozess oder Verfahren) durchführen. Die Aktoren werden von einer Steuerung der automatisierten Anlage gesteuert, wobei die Steuerung durch Sensoren Informationen über den Prozess bzw. den Anlagenzustand erhält.

Der Automatisierungsgrad einer automatisierten Anlage ist umso höher, je unabhängiger die automatisierte Anlagen von menschlichen Eingriffen ist. Die Automatisierung dient neben der Entlastung des Menschen von gefährlichen, anstrengenden oder Routine-Tätigkeiten der Qualitätsverbesserung und steigert die Leistungsfähigkeit der automatisierten Anlage. Zudem können durch Automatisierung Personalkosten gesenkt werden. Dabei werden menschliche Tätigkeiten vorwiegend auf die Beseitigung von Störungen, den Materialnachschub, den Fertigteilabtransport, die Wartung und ähnliche Arbeiten reduziert.

Entwurf, Implementierung von Automatisierungsfunktionen und Inbetriebnahme von automatisierten Anlagen sind stark methodenorientiert. Entwickelte Methoden und Lösungen sind meist das Ergebnis einer (abstrahierenden) Modellbetrachtung realer physikalischer Systeme (automatisierte Anlagen). Dabei werden die physikalischen Systeme häufig mittels eines rechnergestützten virtuellen Abbilds oder Modells, eines sogenannten digitalen Zwillings, modelliert. Auf der Grundlage dieser digitalen Zwillinge können dann wissensbasierte Methoden zum Entwurf und zur Inbetriebnahme der verschiedenen Automatisierungsfunktionen entwickelt werden. Mit wissensbasierten Ansätzen entstehen dann zum Beispiel automatisierte Anlagen, die modellgestützte Regelungen und Steuerungen enthalten.

Das Design einer Produktionsanlage erfolgt demnach mit Hilfe eines digitalen Zwillings. Bei der Umsetzung des digitalen Zwillings in die reale automatisierte Anlage können Abweichungen auftreten. Diese Abweichungen können sich beispielsweise aus örtlichen Gegebenheiten oder ungenauen Montagevorgaben ergeben. Auch Erweiterungen und Umbauten der realen Anlage ohne (manuelles) Update des digitalen Zwillings führen zu Abweichungen zwischen dem digitalen Zwilling und der realen automatisierten Anlage.

Bei der Inbetriebnahme führen derartige Abweichungen zu unerwartetem und unerwünschtem Verhalten mit schlechten Leistungskennzahlen (Key Performance Indicators, KPIs) bzgl. Durchsatz und Produkt-Qualität.

Klassisches Debugging durch Abgleich von Sensor-Werten (Nachrichten-Inhalten) mit den erwarteten Werten aus dem digitalen Zwilling ist zeitaufwändig und fehleranfällig, da die Werte manuell abgeglichen werden, um Abweichungen aufzufinden. Diese manuelle Suche nach der Ursache führt zu erhöhten Kosten und einer Verzögerung des "Start of Production" der automatisierten Anlage.

### Zusammenfassung der Erfindung

Die Aufgabe der vorliegenden Erfindung ist es diese Probleme zu Lösen oder wenigstens zu lindern, indem ein Verfahren zum Auffinden von Unterschieden zwischen einer automatisierten Anlage und einem digitalen Zwilling der automatisierten Anlage gemäß dem unabhängigen Anspruch 1 und eine entsprechende Vorrichtung, sowie eine automatisierte Anlage umfassend die Vorrichtung gemäß den weiteren unabhängigen Ansprüchen bereitgestellt werden. Vorteilhafte Ausgestaltungen und Weiterbildungen sind Gegenstand der jeweils abhängigen Ansprüche.

Gemäß einem ersten Aspekt der vorliegenden Erfindung umfasst ein Verfahren zum Auffinden von Unterschieden zwischen einer automatisierten Anlage und einem digitalen Zwilling der automatisierten Anlage die Schritte:
a) Aufnehmen einer erwarteten Kommunikation auf einem virtuellen Bus-System des digitalen Zwillings.
b) Ableiten wenigstens eines Kommunikationsmusters aus der aufgenommenen erwarteten Kommunikation.
c) Aufnehmen einer realen Kommunikation auf einem realen Bus-System der automatisierten Anlage.
d) Vergleichen der aufgenommenen realen Kommunikation mit dem abgeleiteten wenigstens einen Kommunikationsmuster.
e) Bestimmen wenigstens einer Komponente der automatisierten Anlage, welche von der entsprechenden Komponente des digitalen Zwillings abweicht, falls die aufgenommene reale Kommunikation nicht mit dem abgeleiteten wenigstens einen Kommunikationsmuster korreliert.

Gemäß einem zweiten Aspekt der vorliegenden Erfindung ist eine Vorrichtung zum Auffinden von Unterschieden zwischen einer automatisierten Anlage und einem digitalen Zwilling der automatisierten Anlage ausgebildet, das Verfahren gemäß dem ersten Aspekt der vorliegenden Erfindung auszuführen. Die Vorrichtung umfasst erste Aufnahmemittel, Ableitungsmittel, zweite Aufnahmemittel, Vergleichsmittel und Bestimmungsmittel. Die ersten Aufnahmemittel sind ausgebildet, eine erwartete Kommunikation auf einem virtuellen Bus-System des digitalen Zwillings aufzunehmen. Die Ableitungsmittel sind ausgebildet, wenigstens ein Kommunikationsmuster aus der aufgenommenen erwarteten Kommunikation abzuleiten. Die zweiten Aufnahmemittel sind ausgebildet, eine reale Kommunikation auf einem realen Bus-System der automatisierten Anlage aufzunehmen. Die Vergleichsmittel sind ausgebildet, die aufgenommene reale Kommunikation mit dem abgeleiteten wenigstens einen Kommunikationsmuster zu vergleichen. Die Bestimmungsmittel sind ausgebildet, wenigstens eine Komponente der automatisierten Anlage zu bestimmen, welche von der entsprechenden Komponente des digitalen Zwillings abweicht, falls die aufgenommene reale Kommunikation nicht mit dem abgeleiteten wenigstens einen Kommunikationsmuster korreliert.

Gemäß einem dritten Aspekt der vorliegenden Erfindung umfasst eine automatisierte Anlage die Vorrichtung gemäß dem zweiten Aspekt der vorliegenden Erfindung.

Im Zusammenhang mit der vorliegenden Erfindung wird der Begriff "kontinuierlich" verstanden als zu vorbestimmten Zeitpunkten und insbesondere als jeweils nach einem vordefinierten Zeitintervall. Ein kontinuierlich ausgeführter Schritt wird demnach verstanden als ein Schritt, der zu bestimmten, vordefinierten Zeitpunkten oder jeweils nach Ablauf eines vordefinierten Zeitintervalls ausgeführt wird.

Es wird (vorab) die erwartete Kommunikation bzw. der Datenverkehr auf dem virtuellen Bus-System des digitalen Zwillings simuliert und dabei aufgenommen und gespeichert. Die simulierte erwartete Kommunikation entspricht der Kommunikation in den üblichen Betriebszuständen der automatisierten Maschine (z. B. Anlaufphase, Produktivbetrieb, Herunterfahren usw.).

Die erwartete Kommunikation umfasst zumindest einen vordefinierten Teil der gesamten Kommunikation auf dem virtuellen Bus-System. Kommunikation beschreibt den zeitlichen Verlauf aller Daten, die von einem Sender (z. B. Sensor, Aktor, Steuereinheit usw.) an einen Empfänger (z. B. Sensor, Aktor, Steuereinheit usw.) übertragen werden. Die Daten können in wenigstens einem vordefinierten Datenformat übertragen werden.

Das virtuelle Bus-System des digitalen Zwillings bildet das reale Bus-System der automatisierten Anlage ab. Dabei wird das reale Bus-System hinreichend genau durch das virtuelle Bus-System modelliert, sodass gleiche Daten, die von gleichen Sendern an gleiche Empfänger über beide Bus-Systeme gesendet werden, die gleiche Kommunikation auf beiden Bus-Systemen zu Folge haben.

Nachdem die erwartete Kommunikation aufgenommen wurde, wird daraus das wenigstens eine Kommunikationsmuster abgeleitet. Es wird also aus dem digitalen Zwilling die erwartete Kommunikation auf dem realen Bus-System der Anlage abgeleitet. Es wird dabei untersucht "wer" Daten bzw. Nachrichten "wann" "an wen" schickt. Dazu wird der zeitliche Verlauf der Kommunikation untersucht und auftretende Datenströme in einem für die Kommunikation in dem entsprechenden Betriebszustand charakteristischen Kommunikationsmuster zusammengefasst (und abgespeichert). Die zu betrachtenden Zustände, Daten, Datenströme und Zeitpunkte in dem wenigstens einen Kommunikationsmuster können entweder vorgegeben oder auf Basis erfasster Kommunikation erzeugt werden. Bevorzugt werden für verschiedene Betriebszustände (z. B. Anlaufphase, Produktivbetrieb, Herunterfahren usw.) mehrere (charakteristische) Kommunikationsmuster abgeleitet.

Beispielsweise gibt es Datenströme/Signale, die innerhalb eines bestimmten (relativen) Zeitfensters zwingend auftreten müssen (z. B. Lichtschranke), oder die nie auftreten dürfen (Sensorwert zeigt gemessenen Wert außerhalb Betriebsspezifikation der automatisierten Anlage). Dementsprechend können "fixe" Kommunikationsmuster, bei denen fest vorgegebene Daten an fest vorgegebene Kommunikationsteilnehmer zu fest vorgegebenen Zeiten über das Bus-System übertragen werden müssen (z. B. Handshake zwischen einem Sender und einem Empfänger), und/oder "variable" Kommunikationsmuster abgeleitet werden. Variable Kommunikationsmuster müssen logische Bedingungen erfüllen, die sich aus einem bestimmungsgemäßen Betrieb ableiten lassen. Beispielsweise falls die Steuerung von Antrieben eines Förderbands aufgrund von Durchsatz/Geschwindigkeit von Werkstücken erfolgt, wird sich der erwartete Datenverkehr unterscheiden wenn eine Arbeitsstation ausgelassen wird oder wenn das Werkstück diese Arbeitsstation anfahren soll, da unterschiedliche Sensoren (Geschwindigkeit/Positionierung) beteiligt sind und entsprechenden Datenverkehr erzeugen. Weiter kann beispielsweise, falls es einen optionalen "öffnenden" Arbeitsschritt mit zugehöriger Datenverkehrssignatur gibt, geprüft werden ob die zu erwartende Datenverkehrssignatur für den "schließenden" Arbeitsschritt auch auftritt.

Nachdem das wenigstens eine (charakteristische) Kommunikationsmuster aufgenommen (und abgespeichert) wurde, wird im Betrieb der realen automatisierten Anlage die reale Kommunikation auf dem realen Bus-System (kontinuierlich) aufgenommen bzw. überwacht.

Die aufgenommene reale Kommunikation wird anschließend mit dem abgeleiteten wenigstens einen (charakteristischen) Kommunikationsmuster verglichen. Dabei wird überprüft, ob der zeitliche Verlauf der Datenströme in der aufgenommenen realen Kommunikation dem zeitlichen Verlauf der Datenströme in dem abgeleiteten wenigstens einen (charakteristischen) Kommunikationsmuster entspricht (bzw. nicht zu stark davon abweicht). Es wird also geprüft, ob das abgeleitete wenigstens eine (charakteristische) Kommunikationsmuster mit der aufgenommenen realen Kommunikation, optional mit einer gewissen Toleranz, korreliert.

Falls die aufgenommene reale Kommunikation nicht mit dem abgeleiteten wenigstens einen (charakteristischen) Kommunikationsmuster korreliert, liegt ein unerwarteter Betriebszustand der automatisierten Anlage vor. Diese Abweichung im Betriebszustand kann verschiedene Ursachen haben. Beispielsweise kann die reale automatisierte Anlage vor Ort mit Abweichungen gegenüber dem digitalen Zwilling installiert worden sein. Es kann auch eine Änderung bzw. ein Update der realen automatisierten Anlage vorgenommen worden sein, das noch nicht in dem digitalen Zwilling übernommen wurde. Zudem kann auch ein Fehler, wie beispielsweise eine defekte Komponente der realen automatisierten Anlage, vorliegen.

In diesem Fall wird wenigstens eine (reale) Komponente der automatisierten Anlage bestimmt, die von der entsprechenden Komponente des digitalen Zwillings abweicht. Dabei kann die Abweichung der bestimmten wenigstens einen (realen) Komponente darin bestehen, dass eine andere Komponente als im digitalen Zwilling vorgesehen in der realen automatisierten Anlage verbaut wurde und/oder dass die Anordnung von einer oder mehreren Komponenten in der realen automatisierten Anlage von der Anordnung der entsprechenden Komponenten im digitalen Zwilling abweicht und/oder dass die bestimmte wenigstens eine (reale) Komponente der realen automatisierten Anlage anders eingestellt bzw. kalibriert wurde als im digitalem Zwilling vorgesehen. Es kann auch ein Defekt in der bestimmten wenigstens einen (realen) Komponente der realen automatisierten Anlage vorliegen, der zu der Abweichung in der Kommunikation führt.

Der früheste Zeitpunkt, zudem die aufgenommene reale Kommunikation nicht mehr mit dem abgeleiteten wenigstens einen Kommunikationsmuster korreliert, (bzw. der Zeitpunkt einer Verletzung der Toleranzgrenzen für das erwartete Kommunikationsmuster) gibt einen Hinweis, an welcher Stelle die Abweichung zwischen realer automatisierter Anlage und digitalem Zwilling lokalisiert ist. Durch diesen Zeitpunkt und den zu diesem Zeitpunkt noch mit dem digitalen Zwilling kompatiblen Betriebszustand erhält man den Hinweis, wo in der realen automatisierten Anlage der Betrieb im Vergleich zum digitalen Zwilling auseinanderläuft. Denn zu besagtem Zeitpunkt senden nur bestimmte Komponenten der realen automatisierten Anlage Daten über das reale Bus-System. Somit muss die Abweichung im Betriebszustand der realen automatisierten Anlage von zumindest einer dieser Komponenten stammen. Beispielsweise werden bei einem fehlgeschlagenen Handshake die gleichen Daten erneut über das Bus-System gesendet, um den Handshake zu wiederholen. Tritt diese Wiederholung häufiger auf (vorgegebene Toleranzgrenze), so kann auf einen defekten Sender und/oder Empfänger der Handshake-Daten geschlossen werden.

Sobald die wenigstens eine Komponente der automatisierten Anlage, welche von der entsprechenden Komponente des digitalen Zwillings abweicht, bestimmt wurde, können entsprechende Gegenmaßnahmen eingeleitet werden (z. B. Aktualisieren des digitalen Zwillings, damit dieser mit der aktualisierten realen automatisierten Anlage wieder übereinstimmt, Korrigieren von Abweichungen gegenüber dem digitalen Zwilling in der realen automatisierten Anlage, Reparatur bzw. Austausch defekter Komponenten der realen automatisierten Anlage usw.).

Durch eine Berücksichtigung von Toleranzen und die Unterscheidung in "fixe" und "variable" Kommunikationsmuster können zudem zufällige Abweichungen in der Kommunikation "herausgefiltert" werden.

Die ersten Aufnahmemittel, die Ableitungsmittel, die zweiten Aufnahmemittel, die Vergleichsmittel und die Bestimmungsmittel der Vorrichtung können durch Hardware und/oder Software umgesetzt werden. Beispielsweise können die ersten Aufnahmemittel, die Ableitungsmittel, die zweiten Aufnahmemittel, die Vergleichsmittel und die Bestimmungsmittel auf einer Steuereinheit der automatisierten Anlage als Softwaremodule (eigene Instanzen) implementiert sein.

Gegenüber einer rein manuellen Analyse einer Aufzeichnung der Kommunikation in automatisierten Anlagen werden die erfassten Datenströme gemäß der vorliegenden Erfindung gegenüber spezifischen das gewünschte Anlagenverhalten repräsentierenden Kommunikationsmustern bewertet, die aus Simulationen mit entsprechenden digitalen Zwillingen abgeleitet wurden. Damit können Abweichungen einem bestimmten Kontext (Kommunikationsmuster und -teilnehmer) zugeordnet werden. Dies führt zu reduzierten Kosten (Zeit und Aufwand) bei der Inbetriebsetzung von automatisierten Anlagen.

Gemäß einer Weiterbildung der vorliegenden Erfindung wird im Schritt b) das wenigstens eine Kommunikationsmuster mit einer Toleranzgrenze versehen.

Durch die Vorgabe von bestimmten Toleranzgrenzen kann zufällig auftretenden Abweichungen in der Kommunikation auf dem realen Bus-System begegnet werden.

Somit können falsche Bestimmungen von Komponenten, die angeblich vom digitalen Zwilling abweichen, aufgrund von nur zufälligen Abweichungen effektiv vermieden werden.

Gemäß einer weiteren Weiterbildung der vorliegenden Erfindung wird im Schritt a) ein Betrieb mit zufälligen Abweichungen von Parametern des digitalen Zwillings simuliert, um die Toleranzgrenze des Kommunikationsmusters in Schritt b) implizit zu erzeugen.

Für die Erzeugung der Kommunikationsmuster inklusive Toleranzgrenzen kann der simulierte Anlagenbetrieb mit beaufschlagten zufälligen Abweichungen bei Zeit- und erwarteten Produkt- und Prozess-Parametern verwendet werden (jeweils innerhalb eines beabsichtigten Betriebszustands). Hieraus können dann automatisiert "fixe" und "variable" Kommunikationsmuster im Nachrichtenverkehr ermittelt werden.

Hierdurch können die Kommunikationsmuster inklusive Toleranzgrenzen besonders einfach und effektiv automatisch erzeugt werden.

Gemäß einer weiteren Weiterbildung der vorliegenden Erfindung umfasst das Verfahren ferner den Schritt:
f) Ermitteln von leistungsbegrenzenden Parametern der automatisierten Anlage basierend auf dem Abstand der aufgenommenen Kommunikation von den Toleranzgrenzen des wenigstens einen Kommunikationsmusters.

Gemäß einer weiteren Weiterbildung der vorliegenden Erfindung umfasst die Vorrichtung ferner Ermittlungsmittel. Die Ermittlungsmittel sind ausgebildet, leistungsbegrenzende Parameter der automatisierten Anlage basierend auf dem Abstand der aufgenommenen Kommunikation von den Toleranzgrenzen des wenigstens einen Kommunikationsmusters zu ermitteln.

Eine Überprüfung, wie weit Toleranzbereiche des abgeleiteten wenigstens einen Kommunikationsmusters ausgenutzt werden bzw. wie nahe die reale Kommunikation an den Toleranzgrenzen liegt, kann auch verwendet werden, um die leistungsbegrenzenden Parameter zu identifizieren und anschließend für eine Optimierung des realen Anlagenbetriebs auszunutzen und/oder um damit den digitalen Zwilling zu kalibrieren (Zeitschranken, Zykluszeiten).

Die Ermittlungsmittel der Vorrichtung können durch Hardware und/oder Software umgesetzt werden. Beispielsweise können die Ermittlungsmittel auf einer Steuereinheit der automatisierten Anlage als Softwaremodule (eigene Instanzen) implementiert sein.

Somit können ein optimaler Anlagenbetrieb, sowie ein richtig kalibrierter digitaler Zwilling zu jeder Zeit sichergestellt werden.

Die Erfindung sowie das technische Umfeld werden nachfolgend anhand der Figuren näher erläutert. Es wird darauf hingewiesen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere wird darauf hingewiesen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.
- Fig. 1: zeigt ein schematisches Flussdiagramm des Verfahrens zum Auffinden von Unterschieden zwischen einer automatisierten Anlage und einem digitalen Zwilling der automatisierten Anlage.
- Fig. 2: zeigt eine schematische Darstellung der automatisierten Anlage mit der Vorrichtung zum Auffinden von Unterschieden zwischen der automatisierten Anlage und einem digitalen Zwilling der automatisierten Anlage.

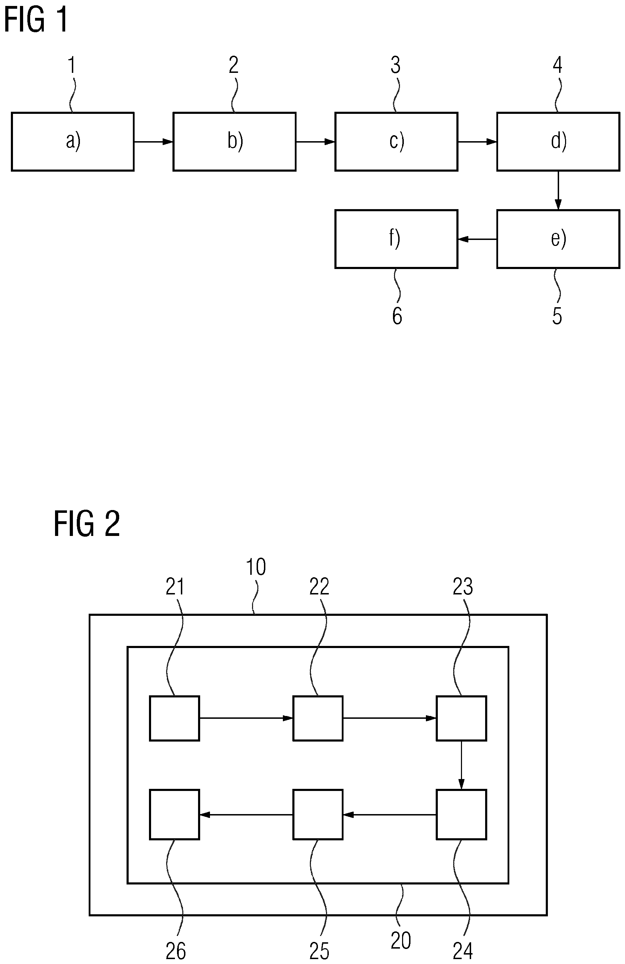

In Fig. 1 ist das Verfahren zum Auffinden von Unterschieden zwischen einer automatisierten Anlage und einem digitalen Zwilling der automatisierten Anlage schematisch dargestellt. Das Verfahren umfasst die Schritte a) Aufnehmen 1 einer erwarteten Kommunikation, b) Ableiten 2 wenigstens eines Kommunikationsmusters, c) Aufnehmen 3 einer realen Kommunikation, d) Vergleichen 4, e) Bestimmen 5 wenigstens einer Komponente und f) Ermitteln 6 von leistungsbegrenzenden Parametern.

Im Schritt a) wird die Kommunikation bzw. der Datenverkehr, der mit dem digitalen Zwilling der automatisierten Anlage simuliert wird, auf einem virtuellen Bus-System des digitalen Zwillings als erwartete Kommunikation aufgenommen (und gespeichert). Die geschieht während der Simulation vordefinierter Betriebszustände wie beispielsweise einer Anlaufphase, eines Produktivbetriebs, eines Herunterfahrens und dergleichen.

Im Schritt b) wird das wenigstens eine Kommunikationsmuster aus der aufgenommenen erwarteten Kommunikation abgeleitet. Dazu werden Datenströme der aufgenommenen erwarteten Kommunikation insbesondere bezüglich des Senders (wer), des Zeitpunkts (wann) und des Empfängers (an wen) analysiert. Dem wenigstens einen Kommunikationsmuster werden Toleranzgrenzen hinzugefügt, innerhalb welcher die reale Kommunikation von dem wenigstens einen Kommunikationsmuster abweichen darf. Diese Toleranzgrenzen können direkt bei der Simulation der Kommunikation mit dem digitalen Zwilling durch Einbeziehung von zufälligen Abweichungen von Parametern des digitalen Zwillings mit erzeugt werden.

Im Schritt c) wird die reale Kommunikation auf einem realen Bus-System der automatisierten Anlage aufgenommen (und gespeichert).

Im Schritt d) wird die aufgenommene reale Kommunikation mit dem abgeleiteten wenigstens einen Kommunikationsmuster verglichen. Es wird überprüft, ob oder inwieweit die aufgenommene reale Kommunikation mit dem abgeleiteten wenigstens einen Kommunikationsmuster korreliert.

Im Schritt e) wird, falls die aufgenommene reale Kommunikation nicht mit dem abgeleiteten wenigstens einen Kommunikationsmuster korreliert bzw. die Toleranzgrenzen überschreitet, die wenigstens eine Komponente der automatisierten Anlage bestimmt, welche von der entsprechenden Komponente des digitalen Zwillings abweicht. Dies geschieht durch Identifikation des frühesten Zeitpunkts, zudem die aufgenommene reale Kommunikation nicht mehr mit dem abgeleiteten wenigstens einen Kommunikationsmuster korreliert, (bzw. des Zeitpunkts einer Verletzung der Toleranzgrenzen für das erwartete Kommunikationsmuster). Dieser Zeitpunkt gibt an, an welcher Stelle die Abweichung zwischen realer automatisierter Anlage und digitalem Zwilling lokalisiert ist. Denn zu besagtem Zeitpunkt senden nur bestimmte Komponenten der realen automatisierten Anlage Daten über das reale Bus-System. Somit muss die Abweichung im Betriebszustand der realen automatisierten Anlage von zumindest einer dieser Komponenten stammen.

Im Schritt f) werden leistungsbegrenzende Parameter der realen Anlage basierend auf dem Abstand der aufgenommenen Kommunikation von den Toleranzgrenzen des wenigstens einen Kommunikationsmusters ermittelt. Durch die Überprüfung wie weit Toleranzbereiche des abgeleiteten wenigstens einen Kommunikationsmusters ausgenutzt werden, werden die leistungsbegrenzenden Parameter identifiziert. Die leistungsbegrenzenden Parameter können anschließend für eine Optimierung des realen Anlagenbetriebs ausgenutzt und/oder damit der digitale Zwilling kalibriert werden.

In Fig. 2 ist die automatisierte Anlage 10 mit der Vorrichtung 20 zum Auffinden von Unterschieden zwischen der automatisierten Anlage 10 und einem digitalen Zwilling der automatisierten Anlage 10 schematisch dargestellt. Die Vorrichtung 20 ist ausgebildet, das Verfahren aus Fig. 1 auszuführen. Die Vorrichtung 20 umfasst dazu erste Aufnahmemittel 21, Ableitungsmittel 22, zweite Aufnahmemittel 23, Vergleichsmittel 24, Bestimmungsmittel 25 und Ermittlungsmittel 26, die als Softwaremodule auf einer Steuereinheit der automatisierten Anlage 10 implementiert sind. Die Mittel 21-26 sind kommunikativ miteinander verbunden.

Die ersten Aufnahmemittel 21 sind ausgestaltet, den Schritt a) aus Fig. 1 auszuführen. Die Ableitungsmittel 22 sind ausgestaltet, den Schritt b) aus Fig. 1 auszuführen. Die zweiten Aufnahmemittel 23 sind ausgestaltet, den Schritt c) aus Fig. 1 auszuführen. Die Vergleichsmittel 24 sind ausgestaltet, den Schritt d) aus Fig. 1 auszuführen. Die Bestimmungsmittel 25 sind ausgestaltet, den Schritt e) aus Fig. 1 auszuführen. Die Ermittlungsmittel 26 sind ausgestaltet, den Schritt f) aus Fig. 1 auszuführen.

Obwohl hier spezifische Ausführungsformen illustriert und beschrieben wurden, ist für den Fachmann ersichtlich, dass es eine Vielzahl von Alternativen und/oder gleichwertigen Implementierungen gibt. Es ist zu würdigen, dass die exemplarischen Ausgestaltungen oder Ausführungsformen nur Beispiele sind und nicht dazu gedacht sind, den Umfang, die Anwendbarkeit oder die Konfiguration in irgendeiner Weise einzuschränken. Vielmehr wird die vorstehende Zusammenfassung und detaillierte Beschreibung dem Fachmann hinreichende Anweisungen für die Umsetzung von mindestens einer bevorzugten Ausführungsform liefern, wobei es sich versteht, dass verschiedene Änderungen in der Funktion und Anordnung der Elemente, die in einer beispielhaften Ausgestaltung beschrieben werden, nicht von dem in den beigefügten Ansprüchen und ihren rechtlichen äquivalenten dargelegten Anwendungsbereich hinausführen. In der Regel ist diese Anmeldung dazu gedacht, alle Anpassungen oder Variationen der hier diskutierten spezifischen Ausführungsformen abzudecken.

In der vorstehenden ausführlichen Beschreibung wurden verschiedene Merkmale in einem oder mehreren Beispielen zusammengefasst, um die Offenbarung knapp zu halten. Es versteht sich, dass die obige Beschreibung illustrativ und nicht restriktiv sein soll. Sie soll alle Alternativen, Änderungen und äquivalente abdecken, die im Rahmen der Erfindung enthalten sein können. Viele andere Beispiele werden einem Fachmann bei dem Studium der obigen Offenbarung offensichtlich werden.

Um ein umfassendes Verständnis der Erfindung zu ermöglichen, wird eine spezifische Nomenklatur verwendet, die in der vorstehenden Offenbarung verwendet wurde. Es wird jedoch für einen Fachmann im Lichte der darin enthaltenen Spezifikation ersichtlich sein, dass die spezifischen Details nicht erforderlich sind, um die Erfindung anzuwenden. So werden die vorstehenden Beschreibungen spezieller Ausführungsformen der vorliegenden Erfindung zu Illustrations-und Beschreibungszwecken dargestellt. Sie sind nicht dazu gedacht, erschöpfend zu sein oder die Erfindung auf die oben offenbarten genauen Ausführungsformen zu beschränken; offensichtlich sind viele Modifikationen und Variationen im Hinblick auf die oben genannten Lehren möglich. Die Ausführungsformen wurden ausgewählt und beschrieben, um die Grundsätze der Erfindung und ihre praktischen Anwendungen am besten zu erklären und um somit anderen Fachkräften die Möglichkeit zu geben, die Erfindung und verschiedene Ausführungsformen mit verschiedenen Modifikationen, sowie es für die jeweilige Verwendung geeignet erscheint, am besten anzuwenden. In der gesamten Spezifikation werden die Begriffe "einschließlich" und "in welchem/welcher" als Äquivalente der jeweiligen Begriffe "umfassend" bzw. "worin" verwendet. Darüber hinaus werden die Begriffe "erster/erste/erstes", "zweiter/zweite/zweites", "dritter, dritte, drittes" usw. lediglich als Bezeichnung verwendet und sind nicht dazu gedacht, numerische Anforderungen an die Objekte zu stellen oder eine bestimmte Rangfolge vorzugeben. Im Zusammenhang mit der vorliegenden Beschreibung und den Ansprüchen ist die Verbindung "oder" als Aufnahme ("und/oder") zu verstehen und nicht exklusiv ("entweder... oder").

## Patentansprüche

1. Verfahren zum Auffinden von Unterschieden zwischen einer automatisierten Anlage (10) und einem digitalen Zwilling der automatisierten Anlage (10), umfassend die Schritte:
a) Aufnehmen (1) einer erwarteten Kommunikation auf einem virtuellen Bus-System des digitalen Zwillings;
b) Ableiten (2) wenigstens eines Kommunikationsmusters aus der aufgenommenen erwarteten Kommunikation;
c) Aufnehmen (3) einer realen Kommunikation auf einem realen Bus-System der automatisierten Anlage (10);
d) Vergleichen (4) der aufgenommenen realen Kommunikation mit dem abgeleiteten wenigstens einen Kommunikationsmuster; und
e) Bestimmen (5) wenigstens einer Komponente der automatisierten Anlage(10), welche von der entsprechenden Komponente des digitalen Zwillings abweicht, falls die aufgenommene reale Kommunikation nicht mit dem abgeleiteten wenigstens einen Kommunikationsmuster korreliert.

2. Verfahren gemäß Anspruch 1, wobei im Schritt b) das wenigstens eine Kommunikationsmuster mit einer Toleranzgrenze versehen wird.

3. Verfahren gemäß Anspruch 2, wobei im Schritt a) ein Betrieb mit zufälligen Abweichungen von Parametern des digitalen Zwillings simuliert wird, um die Toleranzgrenze des Kommunikationsmusters in Schritt b) implizit zu erzeugen.

4. Verfahren nach einem der Ansprüche 2 oder 3, ferner umfassend den Schritt:
f) Ermitteln (6) von leistungsbegrenzenden Parametern der automatisierten Anlage (10) basierend auf dem Abstand der aufgenommenen Kommunikation von den Toleranzgrenzen des wenigstens einen Kommunikationsmusters.

5. Vorrichtung (20) zum Auffinden von Unterschieden zwischen einer automatisierten Anlage (10) und einem digitalen Zwilling der automatisierten Anlage (10), die ausgebildet ist, das Verfahren nach Anspruch 1 auszuführen, umfassend:
- erste Aufnahmemittel (21), die ausgebildet sind, eine erwartete Kommunikation auf einem virtuellen Bus-System des digitalen Zwillings aufzunehmen;
- Ableitungsmittel (22), die ausgebildet sind, wenigstens ein Kommunikationsmuster aus der aufgenommenen erwarteten Kommunikation abzuleiten;
- zweite Aufnahmemittel (23), die ausgebildet sind, eine reale Kommunikation auf einem realen Bus-System der automatisierten Anlage (10) aufzunehmen;
- Vergleichsmittel (24), die ausgebildet sind, die aufgenommene reale Kommunikation mit dem abgeleiteten wenigstens einen Kommunikationsmuster zu vergleichen; und
- Bestimmungsmittel (25), die ausgebildet sind, wenigstens eine Komponente der automatisierten Anlage (10) zu bestimmen, welche von der entsprechenden Komponente des digitalen Zwillings abweicht, falls die aufgenommene reale Kommunikation nicht mit dem abgeleiteten wenigstens einen Kommunikationsmuster korreliert.

6. Vorrichtung (20) gemäß Anspruch 5, wobei die Vorrichtung (20) ausgebildet ist, das Verfahren nach Anspruch 2 oder 3 auszuführen.

7. Vorrichtung (20) gemäß Anspruch 6, wobei die Vorrichtung (20) ausgebildet ist, das Verfahren nach Anspruch 4 auszuführen, ferner umfassend:
- Ermittlungsmittel (26), die ausgebildet sind, leistungsbegrenzende Parameter der automatisierten Anlage (10) basierend auf dem Abstand der aufgenommenen Kommunikation von den Toleranzgrenzen des wenigstens einen Kommunikationsmusters zu ermitteln.

8. Automatisierte Anlage (10), umfassend die Vorrichtung (20) nach einem der Ansprüche 5 bis 7.
